# FASCICULE DE BREVET EUROPEEN

(11) **EP 2 379 451 B1**
(45) Date de publication et mention de la délivrance du brevet: **15.07.2015**
(21) Numéro de dépôt: 09805782.1
(22) Date de dépôt: 22.12.2009
(51) Int. Cl.: C01G 49/14, C01B 17/96, B01J 2/30, C01G 21/20, C01G 45/10, C01G 3/10

(54) **PROCEDE DE STABILISATION DE SULFATES**
SULFATSTABILISIERUNGSVERFAHREN
SULPHATE STABILISATION METHOD

(30) Priorité: 12.01.2009 FR 0900104
(43) Date de publication de la demande: 26.10.2011
(73) Titulaire: Darre, Henry Jacques, 02220 Braine (FR)
(72) Inventeur: Darre, Henry Jacques, 02220 Braine (FR)
(74) Mandataire: Grosset-Fournier, Chantal Catherine
(86) Numéro de dépôt international: PCT/FR2009/052667
(87) Numéro de publication internationale: WO 2010/079280

(56) Documents cités:
- WO-A-2005/115920
- DE-A1- 1 946 799
- FR-A- 2 778 651

## Description

La présente invention concerne un procédé de stabilisation de sulfates, notamment de sulfate ferreux.

Le sulfate ferreux, sous-produit des industries métallurgique et chimique est sous forme heptahydratée (FeSO4, 7H20) et est utilisé notamment comme oligo-élément dans l'alimentation animale, en cimenterie comme réducteur de chrome VI, comme antimousse, comme colorant et en micro-fertilisation en cas de carence en fer (chlorose).

Le sulfate de fer heptahydraté a pour inconvénient majeur d'être thermosensible. Sa tenue au stockage est très aléatoire et varie en fonction des conditions climatiques et des variations de température. Ainsi si un volume important de sulfate de fer heptahydraté est stocké dans un silo fermé et qu'il fait chaud, l'eau du cristal s'évapore en partie et simultanément fait fondre d'autres cristaux (le produit est soluble à 98 %). Dès que la température baisse, le produit cristallise à nouveau et peut former des blocs de taille variable voir importante, ce qui empêche fatalement l'écoulement du produit.

Lorsqu'il est destiné à des usages simples (irrigation, traitement des eaux etc.), il peut être mis en oeuvre dans son état brut. En revanche pour d'autres applications, par exemple comme produit de traitement dans l'agriculture (anti-mousse, anti-chlorose...), son état brut, humide et collant, le rend impropre à l'usage. Il doit alors être traité physiquement (séchage, additifs absorbants...) et chimiquement (additifs neutralisants...) pour le rendre apte à s'écouler plus aisément.

Il se présente en général dans un état physique micro-cristallin (granulométire moyenne entre 300 et 600 µm) mais cet état pulvérulent, parfois poussiéreux, se prête encore mal à certaines applications, notamment une distribution manuelle localisée (jardin, horticulture) ou mécanique (épandeur). Aussi est-il nécessaire d'obtenir des granulés de taille importante (> 500 µm) qui sont plus faciles à utiliser.

Plusieurs méthodes ont été utilisées pour granuler le sulfate ferreux. Ainsi le brevet FR 2778651 décrit un procédé de transformation de sulfate de fer heptahydraté en sulfate de fer monohydraté comprenant une étape de déshydratation par circulation d'air chaud d'un mélange contenant du sulfate de fer heptahydraté et des fines de sulfate de fer monohydraté. Dans ce procédé le sulfate de fer reste toujours dans sa phase solide, l'air chaud servant uniquement à évaporer l'eau. Le sulfate de fer monohydraté ainsi obtenu est utilisé pour la nutrition animale. Néanmoins ce procédé n'est pas complètement satisfaisant car la granulométrie reste fine et le produit a malgré tout tendance à reprendre en masse et le procédé mis en oeuvre est coûteux.

Aussi le but de la présente invention est-il de fournir un procédé de stabilisation de sulfate hydraté, notamment de sulfate de fer heptahydraté qui soit facile à mettre en oeuvre, peu coûteux et qui permette d'obtenir un produit stable.

Ce but est atteint au moyen d'un procédé de stabilisation d'un sulfate hydraté comprenant les étapes suivantes :
a) chauffage jusqu'à fusion d'un sulfate hydraté puis addition d'un composé anhydre acide ou neutre présentant un fort pouvoir absorbant, ledit composé anhydre représentant 1 à 50 % en poids du mélange, de préférence 8 à 40 %, ou,
a') chauffage d'un mélange comprenant un sulfate hydraté et un composé anhydre acide ou neutre présentant un fort pouvoir absorbant, ledit composé anhydre représentant 1 à 50 % en poids du mélange, de préférence 8 à 40 %,
b) évaporation de 5 à 20 % en poids de l'eau du liquide obtenu à l'étape a) ou a'),
c) solidification du produit obtenu à l'étape b) et
d) récupération du produit ainsi solidifié.

Au sens de la présente invention, on entend par sulfate hydraté, un sulfate contenant une quantité d'eau liée suffisante pour que ledit sulfate fonde dans son eau de constitution.

Au sens de la présente invention on entend par composé anhydre acide ou neutre présentant un fort pouvoir absorbant, un composé susceptible d'absorber l'eau issue du sulfate hydraté avec lequel il est mis en présence.

Dans le cadre de l'invention, le chauffage du sulfate ou du mélange sulfate et produit anhydre peut être réalisé par n'importe quel moyen de chauffage connu de l'homme du métier, notamment dans un mélangeur planétaire double enveloppe ou un malaxeur horizontal double enveloppe, la température de fusion des sulfates faisant elle-même partie des connaissances de l'homme du métier. Dans le cas du sulfate de fer heptahydraté, on chauffe à une température comprise entre 70 et 90 °C.

L'évaporation peut être réalisée par séchage dont la durée est fonction de la température de séchage utilisée. Le chauffage et l'évaporation peuvent être réalisés simultanément.

Selon un mode avantageux de réalisation de l'invention, le sulfate hydraté peut être choisi parmi les sulfates de métaux alcalins (par exemple les sulfates de lithium, sodium, potassium), les sulfates de métaux alcalino-terreux (magnésium, calcium), les sulfates de métaux de transition, (par exemple les sulfates de chromium, manganèse, fer, cobalt, nickel, cuivre), les sulfates de métaux pauvres (par exemple les sulfates d'aluminium), les sulfates de lanthanes et les sulfates d'actinides. Le sulfate est plus particulièrement un sulfate métallique hydraté choisi dans le groupe comprenant le sulfate de fer heptahydraté, le sulfate de potassium, le sulfate d'aluminium octadécahydraté, le sulfate de magénsium heptahydraté, le sulfate de cuivre pentahydraté, le sulfate de managanèse tétrahydraté, le sulfate de baryum, le sulfate de strontium, le sulfate de plomb et le sulfate d'ammonium.

Selon l'invention, le composé anhydre acide ou neutre présentant un fort pouvoir absorbant est choisi parmi les composés contenant du fer et ceux n'en contenant pas. Comme composé anhydre neutre ne contenant pas de fer on peut citer à titre d'exemple la silice atomisée et comme composé anhydre acide contenant du fer, on peut citer à titre d'exemple des sulfates de fer monohydratés thermiques obtenus par déshydratation de sulfate de fer heptahydraté contenant 30 % de fer ou chimiques contenant 14 % de fer.

La solidification du mélange peut se faire par toute technique connue de l'homme du métier, soit par coulage sur un tapis roulant, soit par coulage dans des lingotières. On obtient ainsi soit des feuilles, soit des bandes, soit des plaques, soit des lingots.

Dans un mode particulier de réalisation de l'invention, le procédé comprend en outre, après l'étape de récupération, une étape de mise en forme du produit solidifié notamment par broyage ou concassage puis éventuellement tamisage Cette étape de mise en forme permet d'obtenir des granulés dont la taille est comprise entre 150 µm et 2 mm ou entre 1 et 10 mm. Les techniques utilisées dans cette étape font également partie des connaissances de l'homme du métier et sont fonction de l'utilisation prévue pour le sulfate ainsi stabilisé.

Dans un mode de réalisation particulier de l'invention, le procédé de stabilisation concerne le sulfate de fer heptahydraté et comprend les étapes suivantes :
a) chauffage jusqu'à fusion de sulfate de fer heptahydraté puis addition de sulfate de fer monohydraté acide ledit sulfate de fer monohydraté représentant entre 10 et 30 % en poids du mélange, de préférence 20 % ou
a') chauffage d'un mélange de sulfate de fer heptahydraté et de sulfate de fer monohydraté acide jusqu'à fusion, ledit sulfate de fer monohydraté représentant entre 10 et 30 % en poids du mélange, de préférence 20 %,
b) évaporation de 5 à 20 % en poids de l'eau du liquide obtenu à l'étape a) ou a'),
c) solidification du produit obtenu à l'étape b)
d) récupération du produit solidifié et
e) broyage et granulation du produit solidifié.

Dans un mode de réalisation avantageux de l'invention, l'étape d) est réalisée en versant le liquide sur un tapis roulant en une couche par exemple de 7 à 8 mm d'épaisseur.

Avec le procédé selon l'invention, qui allie étape de chauffage et évaporation contrôlée, il est possible d'obtenir un sulfate stable dont la teneur en métal initial est conservée. Ainsi dans le cas du sulfate de fer heptahydraté, la teneur en fer initiale de 19 % est conservée.

Les granulés stables, notamment les granulés de sulfate de fer susceptibles d'être préparés par le procédé selon l'invention dont le diamètre moyen varie entre 150 et 2000 µm, avantageusement entre 500 et 2000 µm ou entre 1 et 10 mm, avantageusement entre 1 et 6 mm suivant l'utilisation envisagée possèdent une quantité d'air plus importante entre les cristaux du fait de leur taille et de leur dureté ce qui leur confère une stabilité améliorée.

Dans un mode de réalisation particulier de l'invention, les granulés, lorsque que oe sont des granulés de sulfate de fer, contiennent entre 10 et 30 % en poids de sulfate de fer monohydraté, avantageusement ils contiennent 80% en poids de sulfate de fer heptahydraté et 20 % en poids de sulfate de fer monohydraté.

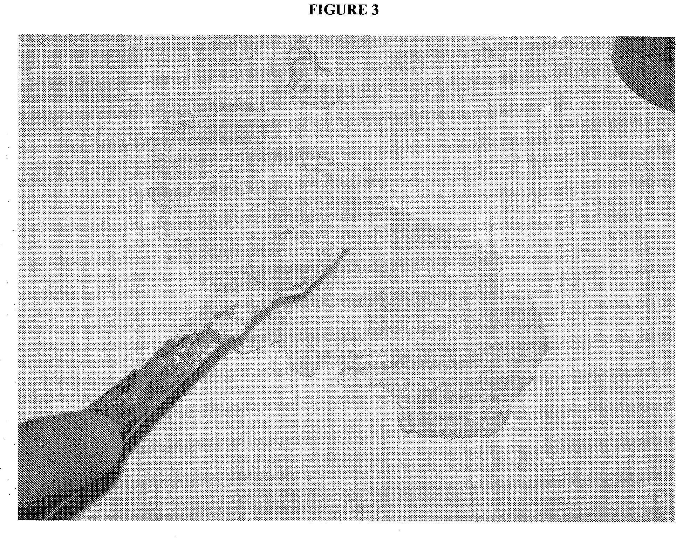

Le procédé selon l'invention est illustré par l'exemple et les figures 1 à 5 qui suivent.
La figure 1 représente du sulfate de fer heptahydraté qui se présente sous forme de neige.
La figure 2 représente le mélange sulfate de fer heptahydraté, sulfate de fer monohydraté à l'état fondu après chauffage et évaporation de l'eau (fin des étapes a et b ou a' et b).
La figure 3 représente le mélange refroidi (fin de l'étape c).
La figure 4 représente une plaquette solidifiée de 6 à 8 mm d'épaisseur obtenue par refroidissement sur un tapis.
La figure 5 représente le produit final concassé par broyage.

### EXEMPLE : Réalisation de granulés de sulfate ferreux et de sulfate de fer monohydraté

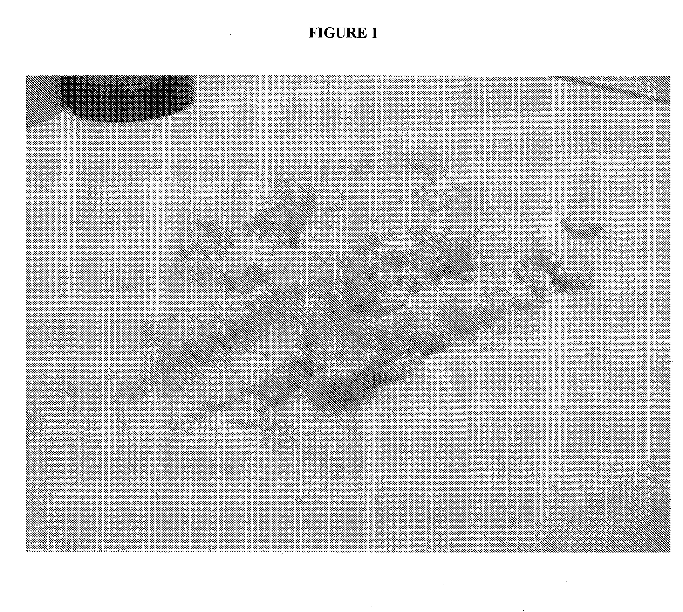

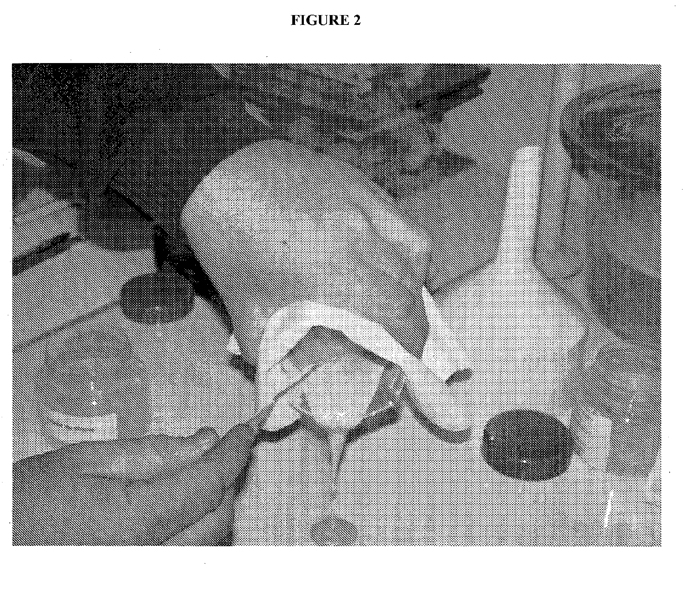

80 g de sulfate ferreux brut heptahydraté sous forme de neige (figure 1) sont mélangés avec 20 g de sulfate de fer monohydraté. Le mélange est chauffé à une température comprise entre 70 et 90 °C de manière à ce qu'on obtienne sa fusion et maintenu à cette température pendant un temps suffisant pour permettre d'évaporer environ 10 % en poids d'eau. On obtient un liquide (figure 2).

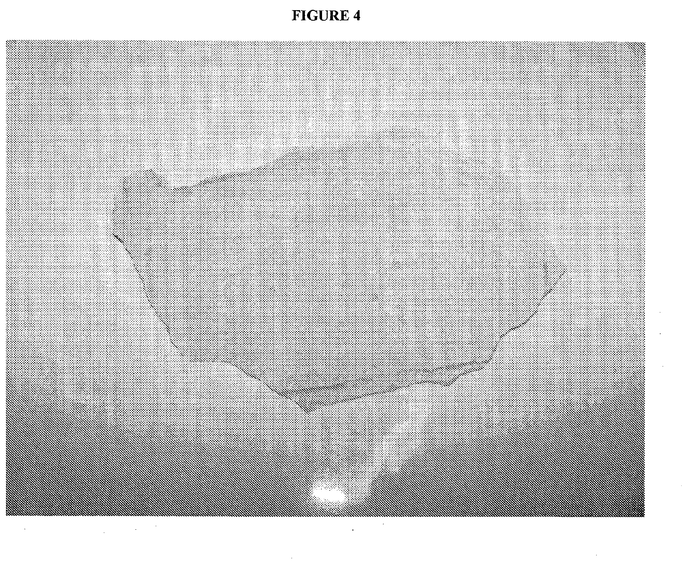

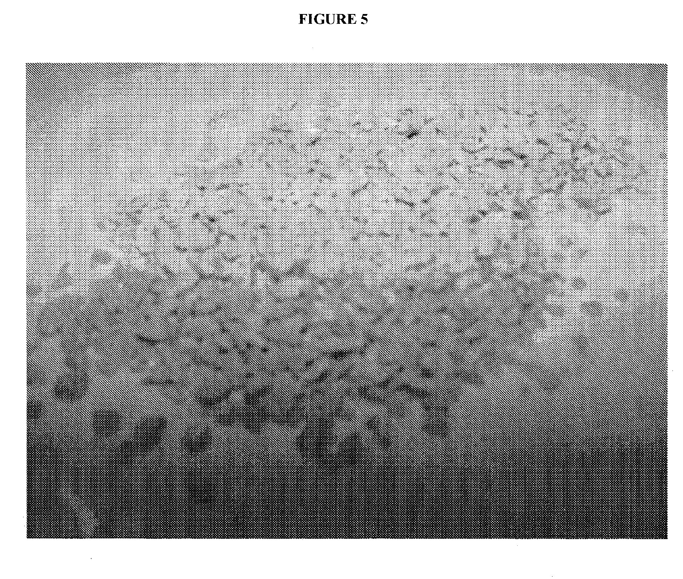

Après refroidissement sur un tapis on obtient le sel résultant sous forme d'une plaque (figure 4) qui est soumise à un broyage suivi d'un tamisage de manière à former des granulés présentant un diamètre compris entre 1 et 6 mm (figure 5).

## Revendications

1. Procédé de stabilisation d'un sulfate hydraté comprenant les étapes suivantes :
a) chauffage jusqu'à fusion d'un sulfate hydraté puis addition d'un composé anhydre acide ou neutre présentant un fort pouvoir absorbant, ledit composé anhydre représentant 1 à 50 % en poids du mélange, de préférence 8 à 40 %, ou,
a') chauffage d'un mélange comprenant un sulfate hydraté et un composé anhydre acide ou neutre présentant un fort pouvoir absorbant, ledit composé anhydre représentant 1 à 50 % en poids du mélange, de préférence 8 à 40 %,
b) évaporation de 5 à 20 % en poids de l'eau du liquide obtenu à l'étape a) ou a')
c) solidification du produit obtenu à l'étape b) et
d) récupération du produit solidifié.

2. Procédé selon la revendication 1 **caractérisé en ce que** le sulfate est un sulfate métallique hydraté choisi dans le groupe comprenant le sulfate de fer heptahydraté, le sulfate de potassium, le sulfate d'aluminium octadécahydraté, le sulfate de magénsium heptahydraté, le sulfate de cuivre pentahydraté, le sulfate de managanèse tétrahydraté, le sulfate de baryum, le sulfate de strontium, le sulfate de plomb et le sulfate d'ammonium.

3. Procédé selon l'une quelconque des revendications 1 et 2, **caractérisé en ce que** le composé anhydre acide ou neutre présentant un fort pouvoir absorbant est choisi parmi les composés contenant du fer et ceux n'en contenant pas.

4. Procédé selon la revendication 3 **caractérisé en ce que** le composé anhydre neutre présentant un fort pouvoir absorbant est de la silice atomisée.

5. Procédé selon la revendication 3, **caractérisé en ce que** le composé anhydre acide présentant un fort pouvoir absorbant est un sulfate de fer monohydraté.

6. Procédé selon l'une quelconque des revendications précédentes caractérisé en ce le procédé comprend en outre, après l'étape de récupération, une étape de mise en forme du produit solidifié.

7. Procédé selon la revendication 1 de stabilisation de sulfate de fer heptahydraté comprenant les étapes suivantes :
a) chauffage jusqu'à fusion de sulfate de fer heptahydraté puis addition de sulfate de fer monohydraté acide ledit sulfate de fer monohydraté représentant entre 10 et 30 % en poids du mélange, avantageusement 20 % ou
a') chauffage d'un mélange de sulfate de fer heptahydraté et de sulfate de fer monohydraté acide jusqu'à fusion, ledit sulfate de fer monohydraté représentant entre 10 et 30 % en poids du mélange, avantageusement 20 %
b) évaporation de 5 à 20 % en poids de l'eau du liquide obtenu à l'étape a) ou a',
c) étape de solidification du produit obtenu à l'étape b) et
d) récupération du produit solidifié et
e) mise en forme du produit solidifié.

8. Procédé selon la revendication 7 **caractérisé en ce que** l'étape d) est réalisée en versant le liquide sur un tapis en une couche de 7 à 8 mm d'épaisseur et que la mise ne forme du produit final est obtenue par broyage/tamisage.

## Patentansprüche

1. Verfahren zur Stabilisierung eines hydratisierten Sulfats, das die folgenden Schritte umfasst:
a) Erwärmen bis zur Fusion eines hydratisierten Sulfats, dann Zugeben einer sauren oder neutralen wasserfreien Verbindung, die ein starkes Absorptionsvermögen aufweist, wobei die wasserfreie Verbindung 1 bis 50 Gew.-%, bevorzugt 8 bis 40 % des Gemischs darstellt, oder
a') Erwärmen eines Gemischs, das ein hydratisiertes Sulfat und eine saure oder neutrale wasserfreie Verbindung, die ein starkes Absorptionsvermögen aufweist, umfasst, wobei die wasserfreie Verbindung 1 bis 50 Gew.-%, bevorzugt 8 bis 40 % des Gemischs darstellt,
b) Verdampfen von 5 bis 20 Gew.-% Wasser der in Schritt a) oder a') erhaltenen Flüssigkeit
c) Verfestigen des in Schritt b) erhaltenen Produkts, und
d) Gewinnen des verfestigten Produkts.

2. Verfahren nach Anspruch 1, **dadurch gekennzeichnet, dass** das Sulfat ein hydratisiertes Metall-sulfat ist, ausgewählt aus der Gruppe umfassend Eisensulfat-heptahydrat, Kaliumsulfat, Aluminiumsulfatoctadecahydrat, Magnesiumsulfat-heptahydrat, Kupfersulfat-pentahydrat, Mangansulfat-tetrahydrat, Bariumsulfat, Strontiumsulfat, Bleisulfat und Ammoniumsulfat.

3. Verfahren nach einem der Ansprüche 1 und 2, **dadurch gekennzeichnet, dass** die saure oder neutrale wasserfreie Verbindung, die ein starkes Absorptionsvermögen aufweist, ausgewählt ist aus den eisenhaltigen oder nicht eisenhaltigen Verbindungen.

4. Verfahren nach Anspruch 3, **dadurch gekennzeichnet, dass** es sich bei der neutralen wasserfreien Verbindung, die ein starkes Absorptionsvermögen aufweist, um hochdisperses Siliciumdioxid handelt.

5. Verfahren nach Anspruch 3, **dadurch gekennzeichnet, dass** es sich bei der sauren wasserfreien Verbindung, die ein starkes Absorptionsvermögen aufweist, um Eisensulfat-monohydrat handelt.

6. Verfahren nach einem der vorhergehenden Ansprüche, **dadurch gekennzeichnet, dass** das Verfahren ferner nach dem Schritt zum Gewinnen einen Schritt zum Formen des verfestigten Produkts umfasst.

7. Verfahren nach Anspruch 1 zur Stabilisierung von Eisensulfat-heptahydrat, das die folgenden Schritte umfasst:
a) Erwärmen bis zur Fusion von Eisensulfat-heptahydrat, dann Zugeben von saurem Eisensulfat-monohydrat, wobei das Eisensulfat-monohydrat zwischen 10 und 30 Gew.-%, vorteilhafterweise 20 Gew.-% des Gemischs darstellt, oder
a') Erwärmen eines Gemischs aus Eisensulfat-heptahydrat und saurem Eisensulfat-monohydrat bis zur Fusion, wobei das Eisensulfat-monohydrat zwischen 10 und 30 Gew.-%, vorteilhafterweise 20 Gew.-% des Gemischs darstellt, oder
b) Verdampfen von 5 bis 20 Gew.-% Wasser der in Schritt a) oder a' erhaltenen Flüssigkeit
c) Schritt zum Verfestigen des in Schritt b) erhaltenen Produkts, und
d) Gewinnen des verfestigten Produkts, und
e) Formen des verfestigten Produkts.

8. Verfahren nach Anspruch 7, **dadurch gekennzeichnet, dass** der Schritt d) ausgeführt wird, indem die Flüssigkeit auf ein Band in einer Schicht mit 7 bis 8 mm Dicke gegossen wird und dass das Formen des Endprodukts mittels Zerkleinern/Sieben erhalten wird.

## Claims

1. Method for stabilising a hydrated sulphate comprising the following steps:
a) heating a hydrated sulphate until melting and then adding an acid or neutral anhydrous compound with high absorptive capacity, said anhydrous compound representing 1 to 50% in weight of the mixture, preferably 8 to 40%, or,
a') heating a mixture comprising a hydrated sulphate and an acid or neutral anhydrous compound with high absorptive capacity, the said anhydrous compound representing 1 to 50% in weight of the mixture, preferably 8 to 40%,
b) evaporating 5 to 20% in weight of the water from the liquid obtained in step a) or a')
c) solidifying the product obtained in step b) and
d) recovering the solidified product.

2. Method according to claim 1 **characterized in that** the sulphate is a hydrated metal sulphate selected from the group comprising the heptahydrated iron sulphate, the potassium sulphate, the octadecahydrated aluminium sulphate, the heptahydrated magnesium sulphate, the pentahydrated copper sulphate, the tetrahydrated manganese sulphate, the barium sulphate, the strontium sulphate, the lead sulphate and the ammonium sulphate.

3. Method according to any of claims 1 and 2, **characterized in that** the acid or neutral anhydrous compound with high absorptive capacity is selected among iron containing compounds and non-containing ones.

4. Method according to claim 3 **characterized in that** the acid or neutral anhydrous compound with high absorptive capacity is an atomized silica.

5. Method according to claim 3 **characterized in that** the acid or neutral anhydrous compound with high absorptive capacity is a monohydrated iron sulphate.

6. Method according to any of the previous claims, **characterized in that** the method further comprises after the recovering step, a shaping step of the solidified product.

7. Method according to claim 1 for stabilising a heptahydrated iron sulphate comprising the following steps:
a) heating a heptahydrated iron sulphate until melting and then adding a monohydrated iron sulphate, said monohydrated iron sulphate representing between 10 and 30% in weight of the mixture, advantageously 20%, or,
a') heating a mixture of a heptahydrated iron sulphate and monohydrated iron sulphate until melting, the said monohydrated iron sulphate representing between 10 and 30% in weight of the mixture, advantageously 20%
b) evaporating 5 to 20% in weight of the water from the liquid obtained in step a) or a')
c) solidifying the product obtained in step b) and
d) recovering the solidified product and
e) shaping the solidified product.

8. Method according to claim 7 **characterized in that** step d) is carried out in pouring the liquid onto a carpet as a 7 to 8 mm thick layer and that the shaping of the final product is obtained by grinding/sieving.
